# EUROPÄISCHE PATENTANMELDUNG

(11) **EP 0 935 257 A2**
(43) Veröffentlichungstag der Anmeldung: **11.08.1999**
(21) Anmeldenummer: 99100440.9
(22) Anmeldetag: 11.01.1999
(51) Int. Cl.: G21C 3/32, G21C 3/18

(54) **Versandbereites Kernreaktor-Brennelement**

(30) Priorität: 13.01.1998 DE 29800282 U
(71) Anmelder: SIEMENS AKTIENGESELLSCHAFT, 80333 München (DE)
(72) Erfinder: Kiehlmann, Horst-Dieter Dr., 91301 Forchheim-Reuth (DE); Dörr, Wolgang Dr., 91074 Herzogenaurach (DE); Münch, Claus-Jürgen Dr., 91074 Herzogenaurach (DE); Rau, Peter Dr., 91359 Leutenbach (DE)

(57) **Zusammenfassung**

Um beim Versand von Brennelementen zu verhindern, daß bei einem Absturz durch die Luft aus großer Höhe Brennstoff-Aerosole freigesetzt werden, sind im Brennelement (innerhalb und/oder außerhalb des Brennstabs) zusätzliche Strukturteile angeordnet, die durch eine plastische Verformung den Bremsweg der Brennstoff-Säule verlängern und ein Aufplatzen der Hüllrohre und/oder eine weitgehende Pulverisierung des Brennstoffs verhindern.

## Beschreibung

Die Erfindung betrifft ein Kernreaktor-Brennelement mit zu Brennstoff-Säulen aufgeschichteten gesinterten Brennstoffkörpern (z.B. Pellets), wobei durch zusätzliche, nur für den Versand, (also die Phase zwischen der Fertigstellung des Brennelements im Werk und seiner Installation im Kernkraftwerk) und dabei möglicherweise auftretende, schwerwiegende Unfälle bestimmte Maßnahmen sichergestellt wird, daß auch bei diesen Unfällen keine gefährliche Mengen an radioaktiven Aerosolen, wie sie z.B. durch eine Pulverisierung des Brennstoffs auftreten können, in die Umwelt gelangen. Die Erfindung betrifft ferner einen Brennstab eines Kernreaktor-Brennelements, in dem eine solche Brennstoff-Säule gasdicht eingeschlossen ist und der ebenfalls gegen diese bei derartigen Unfällen auftretenden Gefahr für die Umwelt gesichert ist.

Kernreaktor-Brennelemente enthalten eine Vielzahl von Brennstäben mit jeweils einem Hüllrohr, das eine Brennstoff-Säule einschließt und an seinen Enden mit Endkappen gasdicht verschlossen ist. Ferner enthalten die Brennelemente außer diesen Hüllrohren mit den Endkappen auch noch Kopfteile, Fußteile, Abstandhalter und andere Strukturteile (z.B. einen die Brennstäbe umgebenden Wasserkasten und möglicherweise Kühlmittelrohre im Fall von Siedewasser-Brennelementen, bzw. Führungsrohre für Absorberelemente im Fall von Druckwasser-Brennelementen).

In Kernreaktoren sind verschiedentlich bereits Stoßdämpfer-Einrichtungen vorgesehen, um Schäden zu. vermeiden, die durch Stöße, Schläge oder ähnliche plötzliche Geschwindigkeitsänderungen entstehen könnten. So müssen, z.B. bei Schnellabschaltungen, Absorberelemente rasch in den Kern eingefahren werden und besitzen daher an ihren Enden Stoßdämpfer, damit sie beim Ende des Einfahrens ohne schlagartige Belastungen abgebremst werden können. Bei einem Reaktortyp russischer Bauart werden zum Steuern des Reaktors Steuersäulen aus einem Brennelement mit nachgeschaltetem Absorberelement verwendet, so daß das untere Ende einer Steuersäule ebenfalls durch einen Stoßdämpfer geschützt werden muß. Es ist auch schon der Fall betrachtet worden, daß bei einem Brennelement-Wechsel ein Brennelement, das mittels eines Krans im Wasserbecken des Reaktors bewegt wird, sich löst und auf den Beckenboden aufschlägt, wobei durch die Konstruktion des Brennelements sichergestellt werden soll, daß ein derartiger Schlag nicht zu einer ernsthaften Beschädigung führt, die die Unbrauchbarkeit des Brennelements bedeuten würde.

Solche Maßnahmen zur Dämpfung von Stößen, die im Wasserbecken des Reaktors auftreten können und keine bleibenden Schäden hervorrufen sollen, brauchen nur auf relativ geringe Geschwindigkeitsänderungen ausgelegt zu werden, da der Widerstand bei einem Absturz im Wasser groß ist und auch das Wasser für hydraulische Dämpfungsmaßnahmen zur Verfügung steht.

Bei einem Sturz durch Luft, also z.B. beim Versand fertiggestellter Brennelemente, können jedoch erheblich größere Geschwindigkeitsänderungen auftreten. Die Brennelemente, die eine Länge von über 4 m besitzen, müssen von Transportkränen in erheblicher Höhe über dem Boden bewegt werden. Wird z.B. ein Brennelement in ein Frachtschiff verladen, so können Hubhöhen bis zu 50 m auftreten, so daß die Brennelemente bei einem Absturz Endgeschwindigkeiten bis zu 30 m/s erreichen können. Zwar sind die Brennelemente dabei in Behältern verpackt, jedoch sind diese Behälter nur auf Stöße ausgelegt, die beim normalen Transport auf dem Landweg auftreten können. Behälter für den Versand unbestrahlter Brennelemente sind dabei nur auf schwache Stöße ausgelegt, da bei einer Beschädigung des Behälters der Brennstoff ja immer noch in den Brennstäben des Brennelements eingeschlossen ist und die Umwelt nicht kontaminieren kann, solange die Hüllrohre der Brennstäbe nicht undicht werden. Selbst wenn bei einem Sturz aus größerer Höhe ein üblicher, für unbestrahlte Brennelemente zugelassener Transportbehälter nicht vollkommen zerbricht, sondern die Teile der enthaltenen Brennelemente noch zusammenhält, stellt er praktisch keine "Knautschzone" dar, die die Geschwindigkeit der mit einem hohen Impuls aufschlagenden Brennelemente auf unbedenkliche Grenzwerte verringern kann. Die Erfindung betrifft die Sicherheit bei den erwähnten, zwar äußerst unwahrscheinlichen aber schwerwiegenden Unfällen, bei denen sich die Brennelemente mit einer Relativgeschwindigkeit von etwa 30 m/s und mehr auf ein Hindernis bewegen und abgebremst werden, ohne daß es zu einer Gefährdung der Umwelt kommen soll, obwohl kein großer Bremsweg (d.h. keine wirksame "Knautschzone") zur Verfügung steht.

Bei einem Aufschlagen auf ein festes Hindernis oder einem ähnlichen Bremsvorgang mit kurzem Bremsweg ist es praktisch unvermeidlich, daß die Strukturteile des Brennelements zerstört werden, also auch die Hüllrohre aufbrechen. Dies führt zwar zum Verlust des Brennelements, wäre jedoch aus dem Gesichtspunkt des Umweltschutzes zunächst weniger kritisch, da der Brennstoff ja noch unbestrahlt ist und sein radioaktiver Inhalt daher zunächst in Form eines festgesinterten Brennstoffs (in der Regel Pellets aus Uranoxid oder aus Oxid-Mischungen von Uran und dem besonders umweltschädlichen Plutonium) vorliegt. Falls der Brennstoff nach dem Unfall noch als ursprünglich erzeugter gesinterter makroskopischer Festkörper vorliegt, kann er aufgesammelt und entsorgt werden.

Um das Verhalten der Brennstäbe und des Brennstabs bei einem derartigen Unfall zu untersuchen, hat die Anmelderin entsprechende Brennstab-Dummies mit nicht-radioaktiven Sinterkörpern vergleichbarer mechanischer Eigenschaften mit hoher Geschwindigkeit auf Betonwände geschossen. Dabei hat sich gezeigt, daß nicht nur die Hüllrohre stark deformiert werden und aufplatzen, sondern beim Aufschlag durch die schlagartige Druckerhöhung im Sinterkörper auch das gesinterte Material zerstört wird. Diese Zerstörung ist nicht auf die Bildung größerer Bruchstücke beschränkt, sondern führt bis zur Pulverisierung des Sintermaterials, das sich als Staubwolken oder ähnliche Aerosole in die Umgebung ausbreitet.

Der Erfindung liegt daher die Aufgabe zugrunde, bereits bei der Konstruktion der Brennstäbe oder spätestens bei der Vorbereitung der Brennelemente zum Versand entsprechende Maßnahmen zu treffen, die im Fall eines solchen schwerwiegenden Unfalls, bei dem nur ein kurzer Weg für eine extrem hohe Geschwindigkeitsänderung zur Verfügung steht, eine derartige Ausbreitung von radioaktiven Aerosolen aus den Brennstäben zu vermeiden.

Das Brennelement muß im Transportbehälter derart stoßdämpfend verpackt sein, daß es bei Erschütterungen während eines unfallfreien Transports nicht beschädigt wird. Für zusätzliche Stoßdämpfungs-Einrichtungen, die erst bei einer Beschädigung des Brennelements wirksam werden, ist außerhalb des Brennelements daher praktisch kein Platz. Der Erfindung liegt aber ein Lösungsgedanke zugrunde, der sich ergibt, wenn man ein modernes Kraftfahrzeug mit einem Brennelement vergleicht. Zwar soll beim Kraftfahrzeug der Fahrer vor Verletzungen, beim Brennelement jedoch die Umwelt vor einer Kontamination geschützt werden, jedoch werden die Verhältnisse vergleichbar, wenn die Verletzungsgefahr des mit einer hohen Geschwindigkeit auf ein Hindernis zufahrenden Fahrers im Kraftfahrzeug gleichsetzt mit der Gefahr, daß der Brennstoff bei den eingangs genannten Unfällen pulverisiert und aus den geplatzen Brennstäben freigesetzt wird.

Eine vom Kfz-Fahrer in dieser Gefahrensituation eingeleitete Notbremsung ist dabei mit der Wirkung eines für den Transport unbestrahlter Brennelemente üblichen und zugelassenen Transportbehälters zu vergleichen: In beiden Fällen können die für den unfall-freien Fall vorgesehenen Bremsmittel die Endgeschwindigkeit beim Aufprall nur in besondern günstigen Fällen ausreichend vermindern. Eine wirkungsvolle Sicherheit ist erst gegeben, wenn die plötzliche Geschwindigkeitsänderung, die beim Aufprall des Fahrzeugs (bzw. Brennelements) auftritt, zwar zu dessen irreversibler Zerstörung führt, aber die Abmessungen des aufprallenden Vorderteils (der sogenannten "Knautschzone") des Fahrzeugs (Brennelements) dadurch derart verkürzt werden, daß für den Fahrer (bzw. die Brennstoff-Säule) ein zusätzlicher "Bremsweg" entsteht, auf dem dessen Geschwindigkeit verringert werden kann. Längs dieses "Bremswegs" vernichtet die plastische Verformung des erwähnten Vorderteils annähernd gleichmäßig die kinetische Energie des Fahrers und beschränkt daher dessen Geschwindigkeitsänderung auf Werte unterhalb einer kritischen Obergrenze, bei der eine ernsthafte Verletzung auftritt; die vorderen Fahrzeugteile wirken beim Fahrzeug also als Stoßdämpfer für den Fahrer. Entsprechend sieht die Erfindung vor, in das Brennelement eine zusätzliche Einrichtung zur Stoßdämpfung einzubauen, mit der die über die Brennstoff-Säule überstehenden Strukturteile des Brennelements derart verstärkt werden, daß in diesem Bereich der überstehenden Strukturteile eine plastische Verformung zu einem wirkungsvollen Schutz der Brennstoff-Säule führt. Eine entsprechende Einrichtung zur Stoßdämpfung sieht daher mindestens ein zusätzliches Strukturteil vor, das praktisch nicht elastisch ist, sondern bei hoher Druckbelastung sich plastisch verformt.

In zwei Ausführungsformen der Erfindung wird diese Einrichtung (bzw. wenigstens das erwähnte zusätzliche Strukturteil, das zur Verstärkung vorgesehen ist) nur für die Zwecke des Versands eingebaut und wieder entfernt, bevor das Brennelement im Kraftwerk in den Reaktor eingesetzt wird, da dieses zusätzliche Strukturteil lediglich die bereits ursprünglich vorhandenen und für den Reaktorbetrieb notwendigen Strukturteile des Brennelements ergänzt (also die erwähnten Hüllrohre und deren Endkappen, die Abstandhalter, den Kopf und Fuß des Brennelements etc.), jedoch an Stellen des Brennelements angebracht wird, wo es an sich den Einsatz im Reaktor behindern würde. Solche zusätzlichen Strukturteile sind auf eine plötzliche Geschwindigkeitsänderung des Brennelements ausgelegt, die zu einer irreversiblen Zerstörung zumindest einiger der ursprünglichen Strukturteile führt. Bei einer solchen plötzlichen Geschwindigkeitsänderung verlängern diese zusätzlichen Strukturteile - in einer ersten Ausführungsform der Erfindung - durch eine irreversible Änderungen ihrer Abmessungen den Weg für eine Bewegung der Brennstoff-Säule, bevor die Geschwindigkeitsänderung der Brennstoff-Säule eine Obergrenze erreicht, bei der eine weitgehende Pulverisierung des Brennstoffs erfolgt.

Eine zweite Ausführungsform der Erfindung berücksichtigt, daß der Fahrer im Kraftfahrzeug über einen Sicherheitsgurt an seinem Sitz gehalten wird und auch die Brennstoff-Säulen des Brennelements in Hüllrohren eingeschlossen sind. Dabei wird der Sitz verglichen mit dem Hüllrohr des Brennstabs. Die "Knautschzone" des Fahrzeugs verlängert durch ihre irreversible Verformung den Weg, der zur Verfügung steht, um die Geschwindigkeit des Sitzes (einschließlich des Fahrers) derart abzubremsen, daß die Geschwindigkeitsänderung des Sitzes nicht einen kritischen Wert erreicht, bei dem der Sitz aus der Verankerung gerissen und zerstört wird. Entsprechend ist bei dieser zweiten Ausführungsform der Erfindung eine Stoßdämpfer-Einrichtung mit ebenfalls mindestens einem zusätzlichen Strukturteil vorgesehen, wobei die Stoßdämpfer-Einrichtung bei einer plötzlichen Geschwindigkeitsänderung des Brennelements eine irreversible Änderung der Strukturteile ermöglicht, durch die der Weg für eine Bewegung der Brennstäbe (d.h. die Bewegung der Hüllrohre, genauer: der besonders gefährdeten Endkappe jedes Hüllrohrs) verlängert, bevor eine Geschwindigkeitsänderung dieser Brennstäbe einen kritischen Wert erreicht, bei dem die Hüllrohre der Brennstäbe aufbrechen, also die Brennstäbe platzen.

Bei einem Kraftfahrzeug können Sitz- und Knautschzone derart ausgestaltet sein, daß bei der Höchstgeschwindigkeit des Fahrzeugs die Knautschzone ausreicht, so daß beim Aufprall weder der Fahrer schwer verletzt noch der Sitz zerstört wird. Dies entspricht dem Fall, daß die Einrichtung zur Stoßdämpfung in einer Kombination beider Ausführungsformen so ausgebildet ist, daß weder die Brennstäbe brechen noch der Brennstoff pulverisiert wird. Dies läßt sich aber nur erreichen, solange das Brennelement nicht mit zu hoher Geschwindigkeit auf ein Hindernis aufprallt und die Stoßdämpfer-Einrichtung sowohl für die Geschwindigkeit der Brennstoff-Säule als auch die Geschwindigkeit der Brennstäbe bzw. deren Endkappen einen ausreichenden Bremsweg zur Verfügung stellt. Die Einrichtung kann aber so ausgelegt werden, daß sie zunächst die Geschwindigkeitsänderung der ganzen Brennstäbe, also deren Hüllrohre und deren Brennstoff-Säulen, durch eine Verlängerung des für deren Bewegung zur Verfügung stehenden Weges so begrenzen, daß zu Beginn des Aufpralls weder die Geschwindigkeitsänderung der Brennstoff-Säule die Obergrenze erreicht, bei der eine weitgehende Pulverisierung des Brennstoffs erfolgt, noch die Geschwindigkeitsänderung der Hüllrohre (bzw. deren am Stärksten gefährdeten Endkappen) den kritischen Wert erreichen, bei dem die Hüllrohre aufplatzen. Im weiteren Verlauf des Aufpralls kann dann zwar die Brennstoff-Säule so abgebremst werden, daß ihre Geschwindigkeitsänderung die erwähnte Obergrenze erreicht und der Brennstoff pulverisiert wird, jedoch von den Hüllrohren der Brennstäbe der entsprechende kritische Wert der Geschwindigkeitsänderung, bei dem die Hüllrohre aufplatzen, nicht überschritten wird. Dann ist zwar der Brennstoff am Ende des Aufpralls pulverisiert, aber noch in geschlossenen Hüllrohren eingeschlossen und kann daher aufgesammelt werden. Die Stoßdämpfer-Einrichtung kann aber auch umgekehrt so ausgerichtet werden, daß zuerst die Geschwindigkeitsänderung der Hüllrohre den kritischen Wert überschreiten und die Rohre aufplatzen, jedoch von den Brennstoff-Säulen die Obergrenze der Geschwindigkeitsänderung, bei der eine weitgehende Pulverisierung des Brennstoffs erfolgt, nicht erreicht wird. In diesem Fall platzen zwar die Hüllrohre auf und können Brennstoff-Teile freigeben, da die Pellets einen solchen Aufprall wohl nicht ohne zu zerbrechen überstehen werden, jedoch treten keine größeren Wolken von Staub oder ähnlichen Aerosolen aus.

Kann man mit ausreichender Sicherheit voraussagen, mit welchem Ende die Brennelemente zuerst auf das Hindernis aufschlagen, so wird man wenigstens ein zusätzliches Strukturteil der Dämpfungseinrichtung in dem betreffenden Ende vorsehen. Im allgemeinen aber enthält die Dämpfungseinrichtung sowohl im Fuß wie im Kopf des Brennelements ein entsprechendes zusätzliches Strukturteil.

Diese zusätzlichen Strukturteile bestehen bevorzugt aus einem unelastischen, bei hohem Druck plastisch verformbaren Material und brauchen also nicht zu verhindern, daß beim Auftreffen eines mit so hohen Geschwindigkeiten bewegten Brennelements auf ein festes Hindernis der Fußteil zersplittert und/oder die Endkappen vollkommen deformiert werden und die Hüllrohre aufplatzen. Eine solche Zerstörung, die das Brennelement unbrauchbar macht, tritt vor allem auf, wenn die Längsachse des Brennelements beim Auftreffen auf das Hindernis in der Fallrichtung ausgerichtet ist, also bei einem "senkrechten Aufschlag", bei dem ein Ende des Brennelements die gesamte Wucht des Brennelements auffangen muß, wobei diese Wucht noch erhöht wird, wenn bei dem Unfall noch andere schwere Teile, z.B. das Hebezeug des Krans, auf das Brennelement aufschlägt. Wichtiger ist jedoch, daß durch die plastische Verformung der zusätzlichen Strukturteile ein zusätzlicher Bremsweg für die Pellet-Säule entsteht, die daher auf einem längeren Bremsweg abgebremst wird als das aufschlagende Ende des Brennelement-Kopfes und der Brennstäbe (bzw. die entsprechenden Endkappen). Entsprechend diesem längeren Bremsweg verringert sich die Geschwindigkeitsänderung (Impulsänderung) der Brennstoff-Säule. Auf die untersten Lagen des Brennstoffs wirkt dabei nur die "Wucht" des darüberliegenden Brennstoffs (d.h. sie müssen den Impuls der Brennstoff-Säule auffangen) und bei entsprechender Ausführung dieser zusätzlichen, sich irreversibel verformenden Strukturteile reicht der entstehende, zusätzliche Bremsweg der Brennstoff-Säule aus, um die durch die Geschwindigkeitsänderung entstehende Druckbelastung so weit zu reduzieren, daß gemäß der ersten Ausführungsform die erwähnte, gefährliche Pulverisierung des Brennstoffs wenigstens noch nicht auftritt, auch wenn die Hüllrohre der Brennstäbe bereits aufgeplatzt sein sollten, und/oder daß gemäß der zweiten Ausführungsform wenigstens die Hüllrohre noch nicht zerstört sind, auch wenn der Brennstoff bereits pulverisiert sein sollte.

Durch eine entsprechende Materialwahl für die Endstopfen kann auch Unglücksfällen, bei denen der kritische Wert für das Platzen der Hüllrohre nicht eingehalten werden kann, Rechnung getragen werden. Bei entsprechender Duktilität der Endstopfen werden dann nämlich durch die Verformung und das Aufplatzen der Endstopfen die Brennstoff-Säulen zusätzlich abgebremst, so daß die Obergrenze der Geschwindigkeitsänderung, bei der der Brennstoff pulverisiert wird, nicht erreicht wird.

Bei beiden Varianten sind, wie bereits verwähnt wurde, vorteilhaft die zusätzlichen strukturteile mindestens in der Verlängerung der Brennstoff-Säule angeordnet, und zwar im Kopf und im Fuß des Brennelements, wo sie vor dem Reaktoreinsatz wieder entfernt werden können. Bevorzugt wird dadurch die Baulänge des Brennelements praktisch nicht vergrößert. Sie können also in übliche Transportbehälter eingepackt werden. Ferner können solche unelastischen, irreversibel verformbaren Strukturteile nicht nur in der Verlängerung der Brennstoff-Säule, sondern auch an seitlichen Teilen der Brennstäbe im Brennelement angeordnet sein, um auch den Fall zu berücksichtigen, daß das Brennelement nicht senkrecht aufschlägt, sondern mit seiner Breitseite. Derartige Aufschläge, bei denen das Gewicht der Brennstoff-Säule nicht an der kleinen Querschnittsfläche am unteren Säulenende, sondern mit der ganzen Breitseite der Brennstoff-Säule aufgefangen wird, sind jedoch weit weniger kritisch; dabei ist dann zwar ebenfalls eine Verformung (und möglicherweise ein Aufplatzen) der Hüllrohre, jedoch kein Pulverisieren des Brennstoffs zu erwarten. Stoßdämpfer-Einrichtungen mit seitlich angebrachten zusätzlichen Strukturteilen sind daher hauptsächlich vorgesehen, solange dadurch auch die Querschnittsabmessungen der Brennelemente nicht wesentlich vergrößert werden.

Ferner ist es vorteilhaft, wenn mindestens die aufschlagenden Endstopfen der Brennstäbe jeweils mit einem Profil aus einem mechanisch stabilen (festen) Material versehen ist, das in der Verlängerung der Brennstoff-Säule auf das erwähnte, unelastische zusätzliche Strukturteil gerichtet ist. Vorzugsweise ist dieses zusätzliche Strukturteil aus einem duktileren Material geformt, so daß sich das harte Profil des Endstopfens in das zusätzliche Strukturteil hineinbohren kann. Das feste Profil kann das Strukturteil dabei ganz durchdringen und anschließend sich sogar noch verformen oder zersplittern und ermöglicht auf diese Weise eine weitere Verlängerung des Bremswegs für die Brennstoff-Säule. Vorteilhaft weist dabei das zusätzliche Strukturteil eine vorgeformte Eindringstelle für das Profil auf.

Eine dritte Ausführungsform der Erfindung geht davon aus, daß der Fahrer eines Kraftfahrzeugs durch einen Sicherheitsgurt an seinem Sitz festgehalten wird und daher auch die Brennstoff-Säule durch eine entsprechende Stoßdämpfer-Einrichtung gesichert werden kann, die im Inneren des Brennstabs angeordnet ist und dazu führt, daß bei einer plötzlichen Geschwindigkeitsänderung des Brennstabs (genauer: bei einer durch ein Hindernis hervorgerufenen plötzlichen Geschwindigkeitsänderung der dem Hindernis zugewandten Endkappe des Brennstabs) die zu einem Aufbrechen des Hüllrohrs führt, eine Geschwindigkeitsänderung der Brennstoff-Säule auf einen Wert unter einer Obergrenze begrenzt wird, bei der eine weitgehende Pulverisierung des Brennstoffs erfolgt.

Eine solche Einrichtung enthält bevorzugt ebenfalls ein Strukturteil, das bei den hier angesprochenen Geschwindigkeitsänderungen der Pellet-Säule plastisch verformbar ist, aber - im Gegensatz zu dem bei der ersten Ausführungsform erläuterten zusätzlichen Strukturteil - im Inneren des Brennstabs angeordnet ist und daher bereits bei der Fertigung des Brennstabs eingesetzt wird und vor dem Reaktoreinsatz nicht mehr entfernbar ist.

Dieses plastisch verformbare Strukturteil im Inneren des Brennstabs wirkt also als ein Abstandselement, das einen - beim Aufprall auf ein Hindernis sich verkürzenden - Abstand zwischen der Endkappe und der Brennstoff-Säule sicherstellt. Häufig enthalten Brennstäbe ohnehin eine elastische Feder, die zwischen dem Ende der Brennstoff-Säule und den Endkappen Sammelräume für gasförmige Spaltprodukte bilden, die während des Reaktorbetriebs im Brennstoff gebildet werden. Man kann zwar versuchen, durch eine geeignete Wahl des Federmaterials auch diese bekannten Federn ("Plenum-Federn") so auszubilden, daß sie sich bei dem Aufprall ausreichend plastisch verformen, jedoch dürfte die Wahl eines solchen Federmaterials schwierig sein. Bei einem Aufprall ist nämlich die Elastizitätsreserve einer solchen Plenum-Feder rasch erschöpft, d.h. die Feder wird sofort durch die Wucht des auf ihr lastenden Brennstoffs zusammengeschoben, auf Block beansprucht und schließlich zertrümmert. Um als Stoßdämpfer im betrachteten Fall noch wirken zu können, sollte wenigstens eine Verlängerung des Bremsweges um 5 mm, also eine entsprechende plastische Verformung der bereits zusammengeschobenen oder gar zertrümmerten Plenum-Feder, möglich sein. Ein derartiges plastisches Material, das sich auch zur Herstellung einer elastischen Feder eignet, dürfte schwer zu finden sein, daher wird vorzugsweise ein unelastisches, plastisch verformbares Strukturteil als Dämpfungseinrichtung für die dritte Ausführungsform der Erfindung vorgesehen.

Ein solches unelastisches Strukturteil im Inneren des Brennstabs, das durch plastische Verformung einen zusätzlichen Weg für die Bewegung der Brennstoff-Säule freigibt, ist auch für die erläuterte erste und/oder zweite Ausführungsform der Erfindung vorteilhaft.

Nach einer vierten Ausführungsform der Erfindung, die mit einem oder mehreren der anderen Ausführungsformen kombinierbar ist, ist ferner bei einem Brennstab mit einer Brennstoff-Säule, die in einem gasdichten Hüllrohr mit je einem Endstopfen an seinen Enden eingeschlossen ist, mindestens zwischen einem Ende der Brennstoff-Säule und dem entsprechenden Endstopfen ein zusätzliches Strukturteil angeordnet, das als ein bei hohem Druck unelastisches, aber plastisch verformbares Formteil ausgebildet ist und sich bei einem Aufprall des Brennstabs auf ein Hindernis bereits verformt, bevor das Hüllrohr (unter Verformung der Endkappe) undicht wird.

Ferner kann zwischen der Brennstab-Säule und dem Endstopfen nach der dritten oder vierten Ausführungsform ein keilförmiges Profilteil vorgesehen sein, daß aus einem festeren Material als das Material der Endkappe besteht und sich daher bei einer plötzlichen Geschwindigkeitsänderung der Brennstoff-Säule in die Endkappe hineinbohrt. Dabei kann das zusätzliche Strukturteil zwischen dem keilförmigen Profilteil und der Endkappe angeordnet sein; es kann aber vorteilhaft auch zwischen der Brennstoff-Säule und dem keilförmigen Profilteil angeordnet sein oder zu beiden Seiten des keilförmigen Profilteils befindet sich jeweils ein solches plastischeres bzw. duktileres Strukturteil.

Die verschiedenen Ausführungsformen der Erfindung und vorteilhafte Weiterbildungen dieser Ausführungsformen sind in den Ansprüchen gekennzeichnet.

Zum besseren Verständnis der Erfindung werden mehrere Ausführungsbeispiele anhand von 8 Figuren näher erläutert.

Es zeigen:
- FIG 1: einen Querschnitt durch ein Brennelement, das für den Versand nachträglich mit einer Einrichtung zur Stoßdämpfung nach dem ersten oder zweiten Ausführungsbeispiel versehen wurde;
- FIG 2: einen die Endkappe eines Brennstabs enthaltenden Ausschnitt aus einem Querschnitt durch ein Ende des Brennelements nach Figur 1;
- FIG 3 bis 5: einen Querschnitt durch Brennelemente entsprechend der Figur 1, wobei das Gitter eines Abstandhalters, die Führungsrohre des Brennelements und zusätzliche Strukturteile im Fuß des Brennelements erkennbar sind;
- FIG 6: ein Ende eines Brennstabs nach der zweiten oder dritten Ausführungsform der Erfindung vor einem Aufprall auf ein Hindernis;
- FIG 7: das gleiche Ende des Brennstabs nach einem Aufprall auf das Hindernis; und FIG 8 ein Ende eines anderen Ausführungsbeispiels nach der dritten oder vierten Ausführungsform der Erfindung.

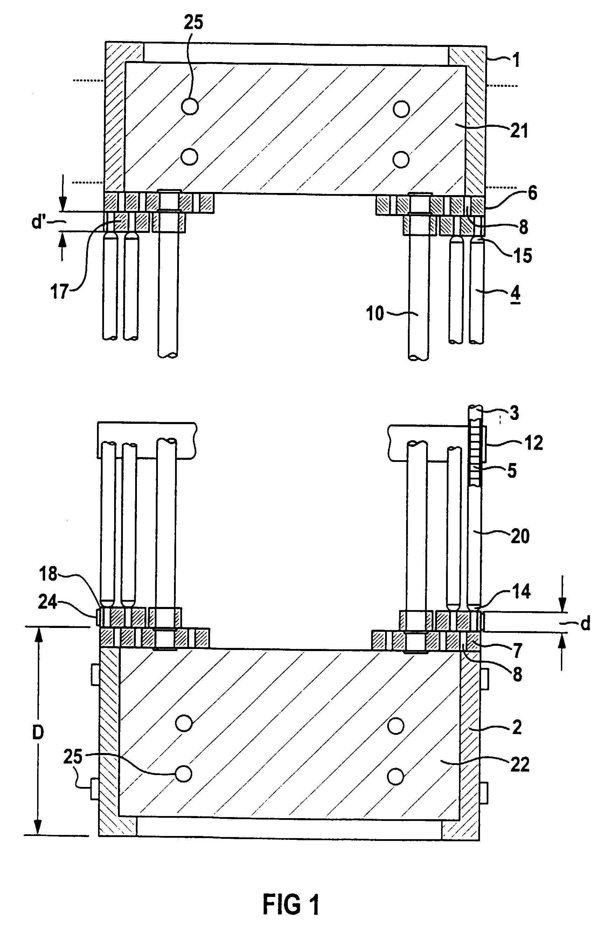

In Figur 1 ist zunächst der Kopfteil 1 und der Fußteil 2 eines betriebsfertigen Brennelements gezeigt, wobei diese Teile im wesentlichen quaderförmige Rahmen bilden, deren Innenräume von ihren Seiten her zugänglich sind. In Richtung auf das Brennstab-Bündel, von dem nur einige der Brennstäbe 4 gezeigt sind, sind diese Rahmen durch jeweils eine Stabhalteplatte 6, 7 mit Durchtrittsöffnungen 8 für das Kühlmittel (im Fall des hier gezeigten Druckwasser-Reaktors also Druckwasser) abgedeckt. Ferner sind einige der Führungsrohre 10 dargestellt, die an ihrem unteren Ende an der Stabhalteplatte 7 des Fußteils 2 festgeschraubt und an ihrem oberen Ende an der Stabhalteplatte 6 des Kopfes 1 befestigt sind. Diese Führungsrohre 10 tragen auch Abstandhalter 12, die Maschen bilden, durch die die Brennstäbe 4 und Führungsrohre 10 geführt sind.

Der Rahmen des Kopfteils 1 der oberen Stabhalteplatte 6, des Fußteils 2 mit der unteren Stabhalteplatte 7, die Führungsrohre 10 und die Abstandhalter 12 sind Strukturteile, die zur Halterung der Brennstäbe 4 erforderlich sind. Weitere Einzelheiten und Strukturteile, wie z.B. Niederhaltefedern am Kopf des Brennelements, sind nicht dargestellt. Ebenso ist nur angedeutet, daß jeder Brennstab 4 ein Hüllrohr 3 als übliches Strukturteil und eine Säule 5 aus Brennstoff-Pellets enthält.

Beim Versand sind solche Brennelemente in Transportbehältern eingesetzt, die in der Figur nicht dargestellt sind und reversibel verformbare Einrichtungen zum Schutz der Brennelemente vor Erschütterungen enthalten können. Wenn dieser Behälter aus großer Höhe (z.B. von einem Kran beim Verladen auf ein Frachtschiff) abstürzt, so entstehen die größten Beschädigungen am Brennelement dann, wenn das Brennelement aufrecht auf dem Boden aufschlägt. Der Transportbehälter kann das Brennelement nicht schützen, da er nur auf normale Belastungen ausgelegt ist. Ohne die Stoßdämpfer-Einrichtungen nach der Erfindung würde der aufschlagende Fuß 2 (bzw. bei entsprechender Stellung des Brennelements der Kopf 1) sofort zu Bruch gehen, da auf ihm die gesamte Masse des Brennelements lastet. Der Bruch erfolgt schlagartig und ist nicht geeignet, die Brennstäbe schonend abzubremsen.

Für die Abbremsung der Brennstäbe 4, deren Endkappen 14 und 15 zunächst im Abstand d, d' von den Stabhalteplatten 6, 7 gehalten sind (in dem zunächst betrachteten Fall sind die gemäß der Erfindung vorgesehenen weiteren Strukturteile 17 und 18 noch nicht eingesetzt), steht aber dieser Abstand d bzw. d' und die jeweilige Höhe D des Fußteils oder Kopfteils zur Verfügung, wenn während der Zerstörung des Fußteils oder Kopfteils eine weitere Bremskraft auf die Brennstäbe ausgeübt würde. Andernfalls würden die Brennstäbe 4 zunächst die Stabhalteplatte dieser Teile durchschlagen und noch immer mit einer sehr hohen Geschwindigkeit auf das Hindernis auftreffen, wodurch die Endkappen 14 und 15 sowie die Hüllrohre 20 dieser Brennstäbe 4 erheblich deformiert werden und aufreißen würden.

Deshalb ist nach dem dargestellten Ausführungsbeispiel der ersten oder zweiten Ausführungsform der Erfindung sowohl der Raum im Inneren des Fußteils 1 und Kopfteils 2 jeweils durch ein Strukturteil 21 bzw. 22 ausgefüllt, und ebenso ist auch der Zwischenraum d, d' zwischen den Brennstäben und den Stabhalteplatten durch entsprechende weitere Strukturteile 17, 18 ausgefüllt. Um das Brennelement am Ort des Kernkraftwerks in den Reaktor einsetzen zu können, müssen die Befestigungen der zusätzlichen Strukturteile (also z.B. die Bänder 24 und Bolzen 25) wieder gelöst und die Strukturteile aus dem Brennelement entfernt werden.

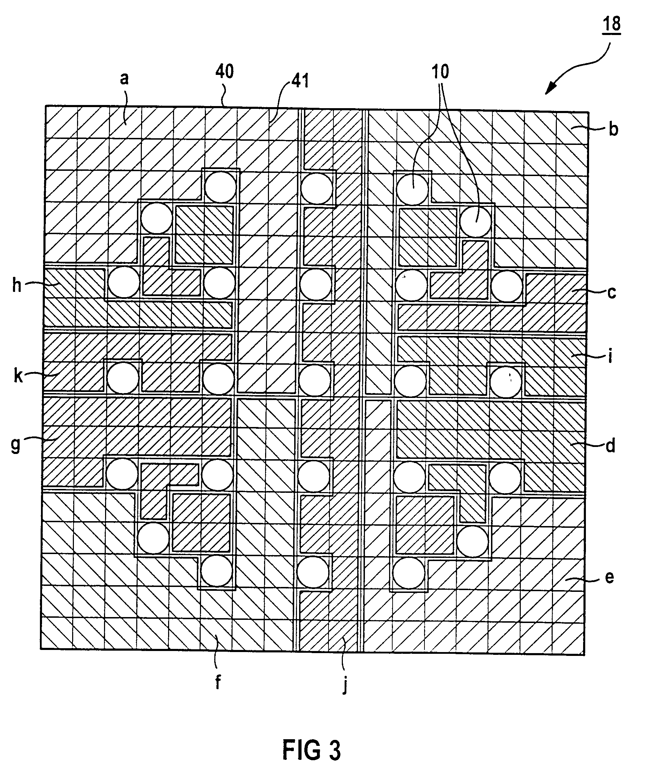

Diese Strukturteile bestehen jeweils aus Einzelteilen, die nachträglich (d.h. nach der fertigen Montage des Brennelements) von ihren zugänglichen Außenseiten in die entsprechenden Zwischenräume eingeschoben werden, wie anhand der weiteren Strukturteile 17, 18 in den Figuren 3 bis 5 noch gezeigt werden wird. Mit einem um das Strukturteil 18 laufenden Metallband 24 bzw. entsprechenden, durch die eingeschobenen Strukturteile laufenden Bolzen 25 sind beispielhaft zwei Möglichkeiten gezeigt, um die eingeschobenen Einzelteile zusammenzuhalten und zu fixieren.

Im Prinzip können diese Strukturteile selbst keramische Gebilde sein, z.B. Sinterkörper, deren mechanische Festigkeit geringer ist als die Festigkeit des gesinterten Brennstoffs. Bevor der Brennstoff pulverisiert wird, pulverisieren daher diese Sinterkörper und können dann wie Sandsäcke, falls sie in einen entsprechenden Behälter (z.B. einem Behälter aus duktilem Metall) eingeschlossen sind, die Brennstäbe abbremsen, bevor deren Brennstoff pulverisiert (erste Ausführungsform). Bei geeigneter Materialwahl werden die Brennstäbe aber auch auf diese Weise abgebremst, bevor die Hüllrohre undicht werden (zweite Ausführungsform). Bevorzugt bestehen die Strukturteile überwiegend aus Metallteilen.

Zur besseren Übersichtlichkeit sind im Fuß 2 die entsprechenden Bolzen 25 so dargestellt, daß sie etwas über den Rahmen des Fußteils hinausragen. Es ist jedoch vorteilhaft, wenn die Abmessungen (insbesondere die Längsabmessungen) des Brennelements in der Form, in der das Brennelement für den Versand vorbereitet ist, durch die zusätzlichen Strukturteile und deren Halterungen nicht über diejenigen Abmessungen hinaus vergrößert werden, die das Brennelement im ursprünglichen Zustand bzw. in dem für den Reaktoreinsatz geeigneten Zustand besitzt.

Wenn jetzt also das derart für den Versand vorbereitete Brennelement mit hoher Geschwindigkeit mit dem Kopf 1 oder dem Fuß 2 auf den Boden aufschlägt, so steht bereits der Raum d' bzw. d zur Abbremsung der Brennstäbe zur Verfügung, da sich die Brennstäbe auf eine Weise, die noch beschrieben werden wird, mit ihren Endkappen teilweise in das Strukturteil 17 bzw. 18 eingraben und - falls sich diese zusätzlichen Strukturteile bei den beim Aufschlag von den Brennstäben ausgeübten Kräften plastisch verformen - auch durch dieses Strukturteil hindurcharbeiten können. Dabei wird bereits eine erhebliche Bremskraft auf die Brennstäbe ausgeübt.

Auf die gleiche Weise wird auch die Höhe D des Fußteils 2 bzw. die entsprechende Höhe des Kopfteils 1 zur Abbremsung der Brennstäbe ausgenützt, da auch das entsprechende Strukturteil 21 bzw. 22 auf eine ähnliche plastische Verformung ausgelegt ist und dabei auf die Brennstäbe eine Bremskraft ausübt, die größer ist und länger andauert als die Kraft, die allein der Rahmen des Kopfteils 1 bzw. Fußteils 2 ausüben kann.

Bei einem ersten Ausführungsbeispiel ist gemäß der ersten Ausführungsform der Erfindung die Materialwahl für die zusätzlichen Strukturteile 17, 18, 21 und 22 derart, daß bei der maximalen Geschwindigkeit, für die das Brennelement bei einem derartigen Unfall ausgelegt ist, die Brennstäbe bei einem Aufprall in Richtung des Fußteils 2 derart tief in die zusätzlichen Strukturteile 18 und 22 eindringen, daß ein entsprechend langer Bremsweg gegeben ist, bei dem der Brennstab und vor allem die im Brennstab angeordnete Brennstoff-Säule langsamer abgebremst wird als das aufschlagende Fußteil 2 des Brennelements selber. Während also die Strukturteile 2 und 7 sowie die zusätzlichen Strukturteile 18 und 22 im aufschlagenden unteren Ende des Brennelements durch die plötzliche Bremsung beim Aufschlag irreversibel verformt, (durchbohrt, zertrümmert oder zerquetscht) werden, steht für die Abbremsung der Brennstäbe 4 und der darin angeordneten Brennstoff-Säulen ein größerer Weg und eine längere Bremsdauer zur Verfügung, über die sich die gesamte Bremswirkung erstreckt.

Beim ersten Ausführungsbeispiel ist die Verformbarkeit der zusätzlichen Strukturteile so gewählt, daß es aufgrund der vergleichmäßigteren Bremsung in den unteren Schichten der Brennstoff-Säule nur zu solchen Drücken kommt, bei denen die Sinterkörper der Brennstoff-Säulen zwar in verhältnismäßig große makroskopische Trümmer zerbrochen werden können, aber nur in geringem Umfang zu mikroskopischen Teilchen pulverisiert werden. Dabei kann jeweils das Hüllrohr der Brennstäbe und vor allem deren am meisten belastete untere Endkappe 14 durchaus derart deformiert werden, daß es aufplatzt, jedoch liegt dabei nur ein geringer Teil des Brennstoffs in Form von mikroskopischen Teilchen oder Aerosolen vor, die sich unkontrolliert in die Atmosphäre ausbreiten und nicht mehr aufgesammelt und entsorgt werden können.

Bei der zweiten Ausführungsform der Erfindung sind die Materialien so gewählt, daß die Hüllrohre und Endkappen der sich beim Aufprall in die Strukturteile 18 und 22 hineinbohrenden Brennstäbe 20 nicht aufplatzen. Es ist dann unschädlich, wenn dabei trotz des vergleichmäßigten Bremsvorgangs in den Brennstoff-Säulen im Inneren der Brennstäbe 4 Geschwindigkeitsänderungen auftreten, bei denen der Brennstoff pulverisiert wird. Es ist sogar tolerierbar, wenn mit einer sehr niedrigen statistischen Wahrscheinlichkeit auch das eine oder andere Hüllrohr aufplatzt oder undicht wird, solange die dabei austretende radioaktive Substanz keine für die Umwelt nicht mehr tolerierbare Werte erreicht.

Das Gleiche gilt natürlich auch, wenn das Brennelement nicht mit dem Fuß, sondern mit dem Kopf zuerst auf das Hindernis aufschlägt und dabei die Brennstäbe 4 mit ihren Endkappen 15 sich in die zusätzlichen Strukturteile 17 und 21 einarbeiten.

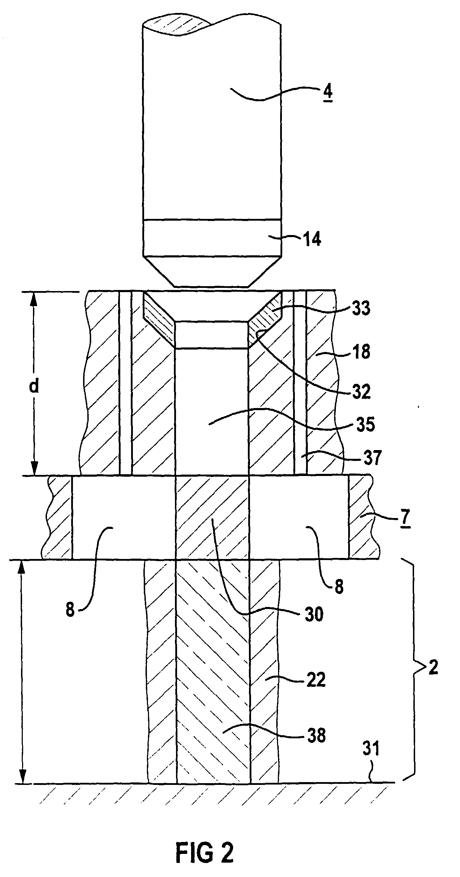

In Figur 2 ist zunächst ein Ausschnitt aus der Stabhalteplatte 7 gezeigt. Dabei ist jeweils zwischen benachbarten Durchtrittsöffnungen 8 dieser Stabhalteplatte ein massiver Steg 30 vorhanden, über dem jeweils die Endkappe 14 eines Brennstabs 4 angeordnet ist. Zwischen der Stabhalteplatte 7 des Kopfes 2 und der gegenüberliegenden Seitenfläche 31 des Fußteils 2 ist das bereits erwähnte zusätzliche Strukturteil 22 erkennbar, während zwischen der Stabhalteplatte 7 und der unteren Endkappe 14 des Brennstabs 4 das entsprechende Strukturteil 18 gezeigt ist. Dieses Strukturteil weist unterhalb der Endkappe 14 eine trichterförmig eingearbeitete Ausnehmung 32 auf, in der ein entsprechendes Profilteil 33 sitzt. Dieses Profilteil 33 ist dem Profil der Endkappe 14 angepaßt und aus einem sehr festen Material gefertigt.

Beim Aufprall verschiebt sich der Brennstab 4 zunächst, bis die Endkappe 14 an dem trichterförmigen Profilteil 33 anliegt. Aufgrund seiner hohen Geschwindigkeit drückt der Brennstab 4 beim Aufprall auf das Profilteil 33, das daher in das Strukturteil 18 eindringt, wobei die trichterförmige Ausnehmung 32 als eine vorgeformte Eindringstelle wirkt. Ferner befindet sich in der Verlängerung des Brennstabs 4 ein vorgefertigter Eindringkanal 35 in dem Strukturteil 18, der allerdings so eng ist, daß er beim Eindringen des Brennstabs 4 bzw. der das Profilteil 33 vor sich herschiebenden Endkappe 14 erheblich aufgeweitet wird. Diese Aufweitung bedeutet eine plastische Verformung des Strukturteils 18, wobei es vorteilhaft sein kann, wenn dieses Strukturteil weitere dünne Bohrungen 37 aufweist, in die das plastisch verformte Material des Strukturteils 18 hineinverdrängt werden kann. Auf diese Weise kann sichergestellt werden, daß dem Brennstab 4 die gesamte Dicke d des Strukturteils 18 als Bremsweg zur Verfügung steht und daß beim Durchdringen dieses Strukturteils 18 eine weitgehend gleichmäßige Bremskraft auf den Brennstab ausgeübt wird. Auf ähnliche Weise kann auch alternativ oder zusätzlich im Strukturteil 22 ein entsprechender vorgeformter Eindringkanal 38 vorgesehen sein.

Dabei kann dieser Kanal 38, der ein tiefes Eindringen des Brennstabs ermöglichen soll, mit einem verhältnismäßig weichen oder plastischen Material ausgefüllt ist, so daß der Brennstab praktisch die ganze Dicke D des zusätzlichen Strukturteils 22 durchdringen kann und dabei gleichmäßig abgebremst wird.

Bevor das Brennelement im Kraftwerk in den Reaktor eingesetzt wird, müssen die Strukturteile 18 und 22 wieder entfernt werden, da der von ihnen eingenommene Raum beim Betrieb des Brennelements frei sein muß. Um das Brennelement zum Entnehmen dieser Strukturteile nicht zerlegen zu müssen, sind die Strukturteile aus Einzelteilen zusammengesetzt, die von der Seite aus aus den Zwischenräumen im Rahmen des Fußes bzw. zwischen den Führungsrohren herausgezogen werden können. Eine derartige Zerlegung in Einzelteile ist für das Strukturteil 18 in Figur 3 gezeigt. Die verschiedenen Einzelteile dieses zusätzlichen Strukturteils 18 sind durch unterschiedliche Schraffur voneinander abgesetzt.

Dabei sind das Außenband 40 und die Innenstege 41 des Abstandhalters erkennbar, die ein Gitter mit Gittermaschen bilden, durch die die Führungsrohre 10 und die (in Figur 3 nicht gezeigten) Brennstäbe 4 geführt sind. Es ist ersichtlich, daß die Einzelteile a, b, c, d, e, f, g, h jeweils nach einer der vier Seiten des Brennelements herausgeschoben werden können.

Nach Entfernung dieser Einzelteile können dann auch die weiteren Einzelteile i, j und k durch eine kombinierte Drehung und Verschiebung (Winkelbewegung) seitlich herausgezogen werden. Dadurch werden dann auch die restlichen, im Inneren des Brennelement-Querschnitts angeordneten Einzelteile zugänglich und können ebenfalls entfernt werden. Natürlich lassen sich zum Versand die Einzelteile in umgekehrter Reihenfolge einsetzen, ohne daß das Brennelement hierzu zerlegt werden muß.

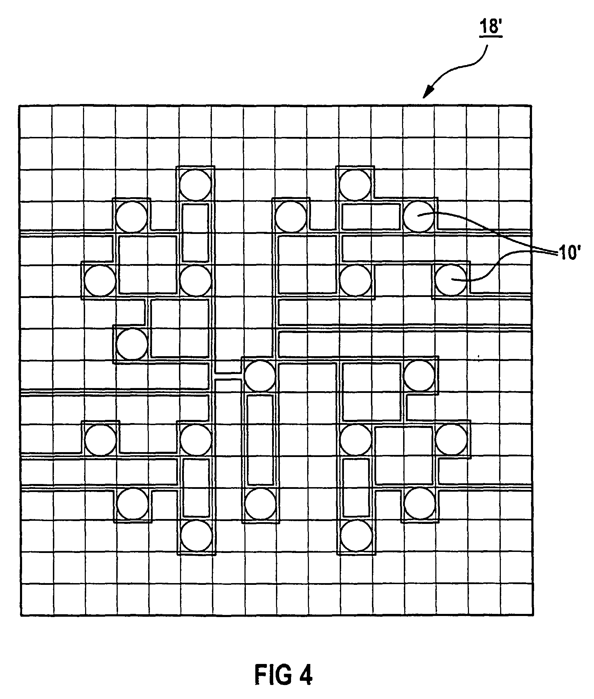

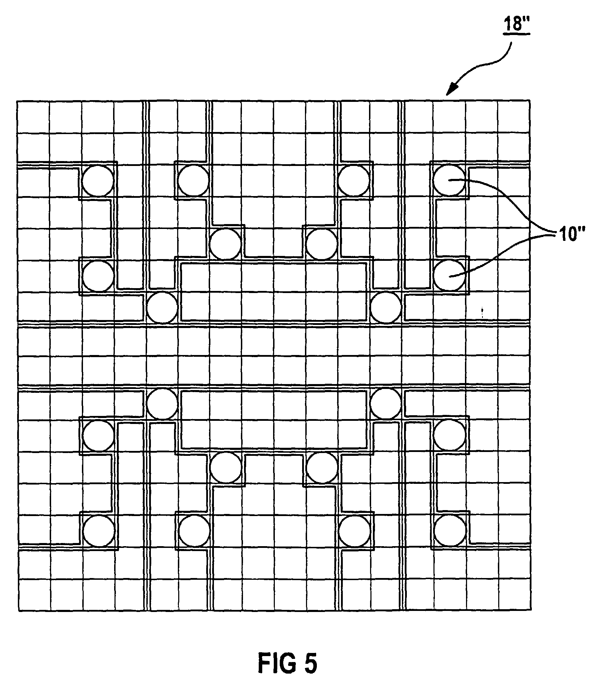

Außer der in Figur 3 gezeigten Anordnung der Führungsrohre 10 sind auch Brennelemente handelsüblich, bei denen die entsprechenden Führungsrohre 10' auf die in Figur 4 gezeigte Weise angeordnet sind. Die Figur 4 beweist dabei, daß auch bei dieser Anordnung ein entsprechendes Strukturteil 18' aus verschiedenen Einzelteilen zusammengesetzt werden kann. Das Gleiche trifft auch für die in Figur 5 gezeigte Anordnung der Führungsrohre 10'' und ein entsprechendes Strukturteil 18'' zu.

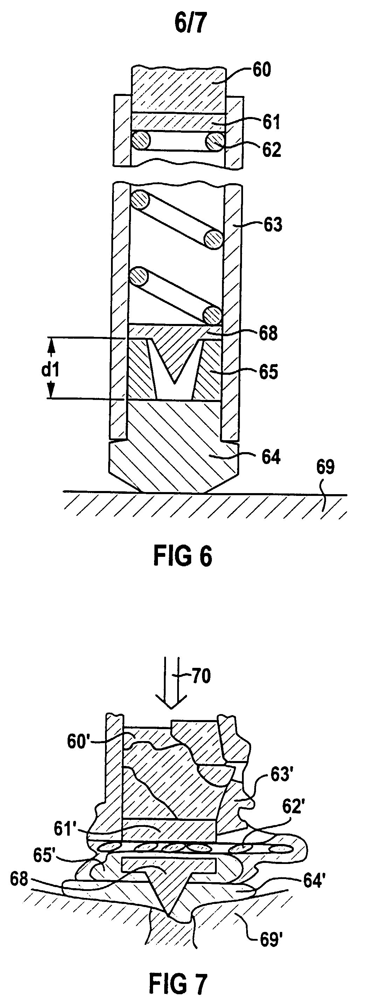

Figur 6 zeigt nun das Innenleben eines Brennstabs, der nach dem dritten oder vierten Ausführungsbeispiel der Erfindung ausgebildet und auch für das Brennelement nach Figur 1 verwendbar ist. Dabei ist von der Brennstoff-Säule, die bei herkömmlichen Druckwasser-Brennelementen in der Regel von gesinterten Pellets gebildet wird, nur das unterste Pellet 60 dargestellt. Dieses Pellet 60 ruht über eine Druckplatte 61 auf einer Plenum-Feder 62, um im Inneren des Hüllrohrs 63 dieses Brennstabs einen Freiraum ("Plenum") zu bilden, indem sich die gasförmigen Spaltprodukte, die während des Reaktorbetriebs im Brennstoff freigesetzt werden, sammeln können. Um auch die Enden des Hüllrohrs 63 gasdicht zu verschließen, sind am oberen und unteren Ende jeweils eine Endkappe 64 vorgesehen, wobei der Brennstab eine eigene, im Inneren des Hüllrohrs angeordnete Einrichtung zur Stoßdämpfung aufweist.

Diese Einrichtung enthält zunächst ein Strukturteil 65, das in diesem Fall ringförmig ausgebildet ist und als zusätzliches Abstandselement dient, um die Brennstoff-Säule mit ihrem untersten Pellet mindestens in einem zusätzlichen Abstand d1 von der Endkappe 64 zu halten. Das Material dieses Strukturteils 65 ist dabei duktiler als das Material des Hüllrohrs 63 und/oder der Endkappe 64. Ferner befindet sich unterhalb dem untersten Pellet 60 der Brennstoff-Säule noch ein keilförmiges Profilteil 68, das in diesem Fall aus einem sehr festen, weniger plastisch verformbaren Material als das Strukturteil 65 und die Endkappe 64 geformt ist. Das Profilteil 68 kann auch ein spitzes, auf die Pellet-Säule gerichtetes Ende aufweisen, das von einem (nicht dargestellten) weiteren duktilen Strukturteil ringförmig umgeben sein kann.

Diese Einrichtung zur Stoßdämpfung am unteren Ende des Brennstabs stört praktisch nicht beim Betrieb des Brennelements, kann also bereits bei der Fertigung des Brennstabs eingebaut werden und auch während des Reaktorbetriebs im Brennstab verbleiben. Dabei ist in Figur 6 angenommen, daß der Brennstab mit seiner unteren Endkappe 64 auf dem unteren Stabhaltegitter 69 eines Brennelements aufsteht.

Figur 7 zeigt nun die Deformationen, die am unteren Ende des Brennstabs auftreten können, wenn bei einem Aufprall auf ein Hindernis die ganze Masse der Brennstoff-Säule auf die Plenum-Feder 62, die Einrichtung zur Stoßdämpfung (also die Teile 65 und 68) und die Endkappe 64 drückt.

Durch die Wucht des Aufpralls wird die Brennstoff-Säule entsprechend dem Pfeil 70 in Figur 7 über die Druckplatte 61 gegen das Profilteil 68 gedrückt. Dabei ist mit 60' dargestellt, daß die Pellets der Brennstoff-Säule in makroskopische Trümmer zerbrechen, wobei auch die Feder 62 in entsprechende Trümmer 62' zerbricht. Dabei ist bei 63' erkennbar, daß auch das untere Ende des Hüllrohrs deformiert wird und aufreißt. Diese Deformationsvorgänge rufen jedoch bei extremen Belastungen noch keine ausreichende Bremskraft auf das untere Pellet 60 hervor, auf die die gesamte Masse der Brennstoff-Säule drückt. Eine erhebliche zusätzliche Bremskraft wird jedoch durch die plastische Verformung des Abstandselements 65 hervorgerufen, wie das Bezugszeichen 65' der Figur 7 zeigt. Das harte Profilteil 68 bohrt sich dabei in das ebenfalls relativ duktile Material der Endkappe 64, die entsprechend Bezugszeichen 64' in Figur 7 ebenfalls stark deformiert wird. Dabei ist es auch zur Zertrümmerung der unteren Stabhalteplatte 69 gekommen oder das Ende des Brennstabs durchdringt diese Platte 69.

Jedoch sind die Pellets der Brennstoff-Säule nur zu einem geringen Teil pulverisiert, zum größeren Teil jedoch in Form makroskopischer Bruchstücke erhalten geblieben. Das Innenleben des Brennstabs nach Figur 6 kann daher mit der Ausführungsform des Brennelements nach Figur 1 kombiniert werden. Hierzu braucht lediglich zwischen der unteren Endkappe 64 und dem unteren Stabhalter 69 des Brennelements das entsprechende Strukturteil 18 der Figuren 1 und 2 dazwischen geschaltet zu werden. Man kommt bei dieser Kombination der Figur 1 und 6 in manchen Fällen auch ohne das Strukturteil 18 aus, sofern wenigstens im Fuß des Brennelements das Strukturteil 22 vorgesehen ist.

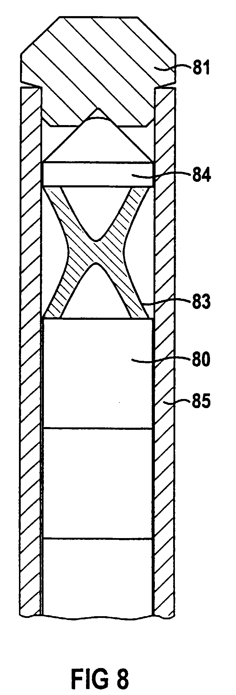

Im oberen Teil des Brennstabs ist nach Figur 8 zwischen dem entsprechenden oberen Pellet 80 und der oberen Endkappe 81 ebenfalls eine Einrichtung zur Stoßdämpfung vorgesehen, wobei diese Einrichtung vorteilhaft ebenfalls aus einem unelastischen, verhältnismäßig duktilen Strukturteil 81 und einem wesentlich weniger duktileren, sondern härteren und festeren Profilteil 84 besteht. Dabei stellt bereits das Strukturteil 83 als Abstandselement ein gewisses Plenum im Inneren des Hüllrohrs sicher. Trifft das Brennelement mit der Endkappe 81 auf ein Hindernis auf, so kommt es ganz ähnlich den in Figur 7 gezeigten Vorgängen zu einer plastischen Verformung des Strukturteils 83 und gleichzeitig arbeitet sich das Profilteil 84 in das Material der Endkappe 81 ein. Dieser Vorgang muß bei Figur 6 nicht (und noch weniger bei Figur 8) zwangsläufig dazu führen, daß der Brennstab undicht werden muß. Dieser Fall entspricht der vierten Ausführungsform der Erfindung.

Es ist selbstverständlich, daß die Ausbildung des oberen Brennstab-Endes nach Figur 8 auch für das entsprechende untere Ende des Brennstabs gewählt werden kann. Ebenso kann die Ausführung des unteren Brennstab-Endes nach Figur 6 auch für das obere Ende eines Brennstabs verwendet werden. Darüber hinaus ist es letztlich nur eine Frage der Dimensionierung der Materialauswahl sowie der Höchstgeschwindigkeiten, auf die das Brennelement bzw. der Brennstab ausgelegt sind, ob bei einer Kombination eines der hier beschriebenen Brennstäbe mit einem der anhand der Figuren 1 bis 5 beschriebenen Brennelemente letztlich eine Zerstörung der Hüllrohre und Endkappen in Kauf genommen, jedoch die Pulverisierung des Brennstoffs mit hoher Sicherheit vermieden wird, oder ob eine Pulverisierung des Brennstabs in Kauf genommen, jedoch ein Aufbrechen der Brennstäbe mit größerer Sicherheit vermieden wird.

Für die bereits ursprünglich vorhandenen und nicht im Hinblick auf eine Stoßdämpfung zusätzlich vorgesehenen Strukturteile können die bisherigen Materialien verwendet werden, also z.B. Stahl für Brennelement-Kopf, Zirkaloy für die Hüllrohre der Brennstäbe, Zirkaloy oder Inconel für die Abstandhalter, und Zirkaloy oder Stahl für die Endkappen der Brennstäbe. Da die als Abstandhalter im Inneren des Brennstabs wirkenden Strukturteile auch während des Reaktorbetriebs in der Nähe des Brennstoffs angeordnet sind, kann es wünschenswert sein, hierfür ein Material mit geringer Neutronenabsorption zu wählen. Hierfür ist z.B. Zirkonium geeignet, das im unlegierten und sauerstoffarmen Zustand eine hohe Duktilität besitzt und bereits durch verhältnismäßig niedrige Kräfte plastisch verformbar ist, wobei aber durch Zulegieren von geringen Mengen an Eisen, Sauerstoff oder anderen Härtern eine größere Festigkeit eingestellt werden kann. Da aber ohnehin häufig am Ende der Brennstoff-Säulen Stahlscheiben zur Reflektion der Neutronen und zur Verbesserung der Betriebseigenschaften erwünscht sind, kann das Material dieser Strukturteile im Inneren des Brennelements auch entsprechend der jeweils gewünschten Duktilität und Festigkeit aus der Vielzahl der bekannten Eisenlegierungen ausgewählt werden. Als besonders feste und harte Legierungen, wie sie für die Profilteile in den Figuren 2, 6 und 8 vorteilhaft sind, können Wolframwerkstoffe oder Legierungen auf Nickelbasis verwendet werden, wobei jedoch auch eine Vielzahl anderer Legierungen geeignet sind, die der Fachmann je nach der gewünschten Materialkombination (insbesondere bezüglich Festigkeit, Härte und Duktilität) auswählen kann. Für die anhand der Figuren 1 bis 5 gezeigten zusätzlichen Strukturteile, die ohnehin nach dem Transport bereits wieder entfernt werden, brauchen praktisch überhaupt keine Rücksichten auf kerntechnische Besonderheiten genommen zu werden, so daß hier z.B. Inconel, Titan, Titanlegierungen oder jede andere Legierung, verwendet werden kann, die auf dem Gebiet der Werkstoffwissenschaft entwickelt ist und die dem Fachmann daher aufgrund ihrer bekannten Materialeigenschaften zur Verfügung stehen.

Um eine Umkonstruktion der üblichen Transportbehälter zu vermeiden, die sich für den normalen Transport der Brennelemente bewährt haben und hierfür genehmigt sind, wird vorteilhaft darauf geachtet, daß die gesamten Außenabmessungen des versandbereiten Brennelements praktisch dem einsatzfähigen Brennelement entsprechen, auf das der Innenraum eines solchen Transportbehälters ausgelegt ist.

Dabei kann es für extreme Belastungen vorteilhaft sein, Kopfteil und/oder Fußteil des Brennelements durch ein Ersatzteil mit den gleichen Außenabmessungen zu ersetzen, wobei dieses Ersatzteil bei schlagartigen Stößen auf die Brennstoff-Säulen als Stoßdämpfer wirkt und während des Transports beschädigt oder zerstört werden kann. Das derart vorbereitete Brennelement wird dann im Transportbehälter angeordnet und transportiert, während das originale Kopfteil und/oder Fußteil sich außerhalb des Transportbehälters befindet und getrennt transportiert wird, um erst am Ankunftsort gegen das Ersatzteil ausgetauscht zu werden.

## Patentansprüche

1. Versandbereites Brennelement mit wenigstens einer Brennstoff-Säule (5) und Strukturteilen, mindestens umfassend ein Hüllrohr (3) mit Endkappen (14, 15) zum gasdichten Einschließen der Brennstoff-Säule in einen Brennstab (4), ein Kopfteil (1), ein Fußteil (2) und Abstandhalter (12),
**gekennzeichnet durch** eine nur für den Versand bestimmte Einrichtung zur Stoßdämpfung mit mindestens einem zusätzlichen Strukturteil (17, 18, 21, 22), das durch eine irreversible Änderung seiner Abmessungen bei einer plötzlichen Geschwindigkeitsänderung des Brennelements, die zu einer irreversiblen Zerstörung eines Strukturteils (1, 2, 12, 14, 15) führt, den Weg für eine Bewegung der Brennstoff-Säule (5) verlängert, bevor die Geschwindigkeitsänderung der Brennstoff-Säule (5) eine Obergrenze erreicht, bei der eine weitgehende Pulverisierung des Brennstoffs erfolgt.

2. Versandbereites Brennelement mit mindestens einer Brennstoff-Säule und Strukturteilen, mindestens umfassend ein Hüllrohr mit Endkappen (14, 15) zum Einschließen der Brennstoff-Säule in einen Brennstab (4), ein Kopfteil (1), ein Fußteil (2) und Abstandhalter (12),
**gekennzeichnet durch** eine nur für den Versand bestimmte Einrichtung zur Stoßdämpfung mit mindestens einem zusätzlichen Strukturteil (17, 18, 21, 22), das durch eine irreversible Änderung seiner Abmessungen bei einer plötzlichen Geschwindigkeitsänderung des Brennelements den Weg für eine Bewegung des Hüllrohrs (3) verlängert, bevor die Geschwindigkeit des Hüllrohrs (3) einen kritischen Wert erreicht, bei dem ein Aufreisen des Hüllrohrs (3) erfolgt.

3. Brennelement nach einem der Ansprüche 1 und 2,
**dadurch gekennzeichnet**, daß das zusätzliche Strukturteil (17, 18, 21, 22) mindestens in der Verlängerung der Brennstoff-Säule (5) außerhalb des die Brennstoff-Säule (5) umgebenden Hüllrohrs (3) angeordnet ist.

4. Brennelement nach einem der Ansprüche 1 bis 3,
**dadurch gekennzeichnet**, daß durch das zusätzliche Strukturteil (17, 18, 21, 22) die Längsabmessung des Brennelements praktisch nicht vergrößert wird.

5. Brennelement nach einem der Ansprüche 1 bis 4,
**dadurch gekennzeichnet**, daß mindestens einem der Endstopfen (14) ein Profilteil (33) zugeordnet ist, das in der Verlängerung der Brennstoff-Säule (5) auf das zusätzliche Strukturteil (18, 22) gerichtet ist, wobei das zusätzliche Strukturteil (18, 22) aus einem unelastischen, unter hohem Druck plastisch verformbaren, duktileren Material besteht als das Profilteil (33).

6. Brennelement nach einem der Ansprüche 1 bis 4,
**dadurch gekennzeichnet**, daß mindestens einem der Endstopfen (14) ein Profilteil (33) zugeordnet ist, das auf ein in der Verlängerung der Brennstab-Säule (5) angeordnetes Strukturteil (7) gerichtet ist und aus einem festeren Material besteht als das Strukturteil (7).

7. Brennelement nach einem der Ansprüche 1 bis 6,
**dadurch gekennzeichnet**, daß in der Verlängerung der Brennstab-Säule (5) ein Strukturteil (18, 22) mit einer vorgeformten Eindringstelle (32, 35, 38) für einen der Endstopfen (14) des Hüllrohrs angeordnet ist.

8. Brennelement nach einem der Ansprüche 1 bis 7,
**dadurch gekennzeichnet**, daß auch im Inneren des Hüllrohrs (63) ein solches zusätzliches Strukturteil (65) angeordnet ist.

9. Brennelement nach einem der Ansprüche 1 bis 8,
**dadurch gekennzeichnet**, daß in der Verlängerung der Brennstoff-Säule (5) an beiden Enden (1, 2) des Brennelements zusätzliche Strukturteile angeordnet sind.

10. Brennstab eines Brennelements mit einer Brennstoff-Säule (60) und einem die Säule (60) gasdicht umschließenden Hüllrohr (63) mit je einem Endstopfen (64) an seinen Enden,
**dadurch gekennzeichnet**, daß mindestens zwischen einem Endstopfen (64) und der Brennstoff-Säule (60) eine auf die Brennstoff-Säule (60) wirkende Einrichtung (65, 68) zur Stoßdämpfung angeordnet ist, die bei einer plötzlichen Geschwindigkeitsänderung der Endkappe (65), die zu einem Aufbrechen des Hüllrohrs (63) führt, eine Geschwindigkeitsänderung der Brennstoff-Säule (60) auf einen Wert begrenzt, der unter einer Obergrenze liegt, bei der eine weitgehende Pulverisierung des Brennstoffs erfolgt.

11. Brennstab nach Anspruch 10,
**dadurch gekennzeichnet**, daß die Einrichtung (65, 68) zur Stoßdämpfung ein im Inneren des Hüllrohrs (63) angeordnetes zusätzliches Strukturteil (65) enthält, das bei der plötzlichen Geschwindigkeitsänderung plastisch verformbar ist und durch eine irreversible Änderung seiner Abmessungen den Weg für die Bewegung der Brennstoff-Säule (60) verlängert.

12. Brennstab nach Anspruch 11,
**dadurch gekennzeichnet**, daß das zusätzliche Strukturteil (65) den Weg für die Bewegung der Brennstoff-Säule (60) bereits verlängert, bevor das Hüllrohr (63) undicht wird.

13. Brennstab eines Brennelements mit einer Brennstoff-Säule (80), die in einem Hüllrohr (85) mit je einem Endstopfen (81) an seinen Enden gasdicht eingeschlossen ist,
**dadurch gekennzeichnet**, daß mindestens zwischen einem Endstopfen (81) und der Brennstoff-Säule (80) ein zusätzliches Strukturteil (83) angeordnet ist, das bei einer plötzlichen Geschwindigkeitsänderung durch ein Aufprallen des Endstopfens (81) auf ein Hindernis durch eine plastische Veränderung seiner Abmessungen den Weg für eine Bewegung der Brennstoff-Säule (84) verlängert, bevor das Hüllrohr (85) undicht wird.

14. Brennstab nach einem der Ansprüche 11 bis 13,
**dadurch gekennzeichnet**, daß das zusätzliche Strukturteil (65, 83) praktisch unelastisch ist.

15. Brennstab nach einem der Ansprüche 11 bis 14,
**dadurch gekennzeichnet**, daß die axiale Länge des zusätzlichen Strukturteils (65, 83) bei der plötzlichen Geschwindigkeitsänderung um mindestens 5 mm verringerbar ist.

16. Brennstab nach einem der Ansprüche 11 bis 15,
**gekennzeichnet durch** ein keilförmiges Profilteil (68, 84) zwischen der Brennstab-Säule (60, 80) und dem Endstopfen (64, 81), das aus einem festeren Material besteht als das Material der Endkappe (64, 81) und dessen keilförmiges Ende auf die Endkappe (64, 81) gerichtet ist.

17. Brennstab nach Anspruch 16,
**dadurch gekennzeichnet**, daß das zusätzliche Strukturteil (65) eine Spitze des keilförmigen Profilteils (68) ringförmig umgibt.

18. Brennstab nach Anspruch 17,
**dadurch gekennzeichnet**, daß das keilförmige Profilteil (84) zwischen dem zusätzlichen Strukturteil (83) und der Endkappe (81) angeordnet ist.

19. Anordnung zum Versenden eines Brennelements, das für den Einsatz in einem Kernreaktor mehrere Brennstoff-Säulen und Strukturteile umfaßt, nämlich mindestens Hüllrohre mit Endkappen zum gasdichten Einschließen der Brennstoff-Säulen, ein Kopfteil, ein Fußteil und Abstandhalter,
**dadurch gekennzeichnet**, daß das Kopfteil und/oder das Fußteil jeweils durch ein Ersatzteil mit den gleichen Abmessungen ersetzt ist, das auf die Brennstoff-Säulen als Stoßdämpfer wirkt, und daß das Brennelement mit dem Ersatzteil in einem Transportbehälter angeordnet ist und das durch das Ersatzteil ersetzte Kopfteil und/oder Fußteil sich außerhalb des Transportbehälters befindet.
